Europäisches Patentamt

**European Patent Office**

Office européen des brevets

(11) Veröffentlichungsnummer: **0 001 609**
**B1**

(12) **EUROPÄISCHE PATENTSCHRIFT**

(45) Veröffentlichungstag der Patentschrift:
04.08.82

(21) Anmeldenummer: 78101112.7

㉒ Anmeldetag· 10.10.78

(51) Int. Cl.³: **F 16 C 43/08,** F 16 C 33/30 //
**F16C29/06**

(54) Verfahren zur Herstellung eines Wälzlagers mit einem in einer Aussenhülse angeordnetem Käfig und Käfig zur Durchführung des Verfahrens.

㉚ Priorität· 20.10.77 DE 7732398 U

(43) Veröffentlichungstag der Anmeldung:
02.05.79 Patentblatt 79/9

(45) Bekanntmachung des Hinweises auf die Patenterteilung:
04.08.82 Patentblatt 82/31

(84) Benannte Vertragsstaaten:
FR GB SE

(56) Entgegenhaltungen:
**DE-B-2 319 340**
**DE-C-285 655**
**DE-U-1 891 685**
**DE-U-7 705 155**

(73) Patentinhaber: **SKF KUGELLAGERFABRIKEN GMBH,**
**Ernst-Sachs-Strasse 2-8 Postfach 1440,**
**D-8720 Schweinfurt (DE)**

(72) Erfinder: **Olschewski, Armin, Stösselstrasse 8,**
**D-8720 Schweinfurt (DE)**
Erfinder: **Brandenstein, Manfred, Tränkgasse 57,**
**D-8781 Aschfeld (DE)**
Erfinder: **Ernst, Horst-Manfred, Frankenstrasse 33,**
**D-8735 Eltingshausen (DE)**
Erfinder: **Walter, Lothar, Harald-Hamberg-Strasse 18,**
**D-8720 Schweinfurt (DE)**

(74) Vertreter: **Glanz, Werner, Dipl.-Ing.,**
**Ernst-Sachs-Strasse 2-8, D-8720 Schweinfurt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung eines Wälzlagers mit einem in einer Außenhülse angeordnetem
Käfig und Käfig zur Durchführung des Verfahrens

Die Erfindung betrifft ein Verfahren zur Herstellung eines Wälzlagers mit einem in einer Außenhülse angeordneten Käfig, insbesondere für Kugellager für Längsbewegungen, mit in Achsrichtung verlaufenden Käfigelementen, die auf einer Seite durch Stege ringförmig verbunden sind und vor dem Einbau in die Außenhülse im wesentlichen in einer Ebene sternförmig angeordnet sind und im Bereich geschwächter, im Verbindungsbereich angeordneter Stellen umgebogen werden.

Durch die DE-U-1 891 685 ist ein Käfig gemäß dem Oberbegriff des Patentanspruchs 1 mit sternförmig an einem Ring angeordneten Käfigelementen, die in Achsrichtung umgebogen werden, bekannt. Die Käfigelemente sind im Bereich der Abbiegung mit Ausnehmungen (Schwächungsstellen) versehen, die das Umbiegen erleichtern. Über die Art und Weise bzw. wann und mit welchen Mitteln die Käfigelemente umgebogen werden, ist in dieser Druckschrift nichts Näheres ausgesagt. Es ist anzunehmen, daß zum Umbiegen der Käfigelemente ein besonderer Arbeitsgang nötig war. Ferner dürften hierfür besondere Werkzeuge benötigt worden sein, falls das Umbiegen jedes einzelnen Käfigelementes nicht von Hand erfolgte.

Ferner ist es durch die DE-B-2 319 340 bei Kugellagern für Längsbewegungen nicht mehr neu, die Führungsnuten des Käfigs durch Laufbahnen tragende Schienen aus Stahlblech oder Kunststoff abzudecken, die an einem Ende durch einen Endring miteinander verbunden sind, wobei die Schienen in axialer Richtung umgebogen und die Knickzonen durch Materialabnahme geschwächt sind. Auch bei dieser bekannten Ausführung sind keine besonderen Angaben über das Umbiegen der Käfigelemente gemacht.

Die Erfindung, wie sie im Anspruch 1 gekennzeichnet ist, löst die Aufgabe, ein Verfahren zur billigen Herstellung eines Wälzlagers mit einem in einer Außenhülse angeordneten Käfig zu schaffen, ohne daß besondere Werkzeuge für das Umbiegen der Stege erforderlich sind.

Die durch das erfindungsgemäße Verfahren erreichten Vorteile sind im wesentlichen darin zu sehen, daß das Umbiegen der Käfigelemente in einem Arbeitsgang mit dem Einschieben des Käfigs in die Außenhülse erfolgt, worin eine erhebliche Arbeitseinsparung liegt. Ferner sind keine besonderen Biegewerkzeuge erforderlich.

Ferner wird gemäß Anspruch 2, ein Käfig zur Durchführung des Verfahrens nach Anspruch 1 beansprucht, der dem Verfahren besonders gut angepaßt ist und außerdem eine gute Rückfederung und damit eine Anlage der Käfigelemente an der Innenwand der Hülse ermöglicht.

Bevorzugte Ausführungsbeispiele der Erfindung werden nachstehend in Verbindung mit der Zeichnung näher erläutert.

Es zeigt
Fig. 1 ein Kugellager für Längsbewegungen mit dem Käfig im Schnitt,
Fig. 2 einen Schnitt A-B des in der Fig. 1 dargestellten Kugellagers für Längsbewegungen,
Fig. 3 eine Draufsicht auf einen Käfig gemäß der Erfindung nach Anspruch 2 vor dem Einbau in die Außenhülse,
Fig. 4 einen Schnitt C-D des Käfigs gemäß Fig. 3,
Fig. 5 einen Teil der Draufsicht auf einen aus Stahlblech gefertigten Käfig anderer, dem Stand der Technik ähnlicher Art, der sich zur Durchführung des Verfahrens nach Anspruch 1 ebenfalls eignet.

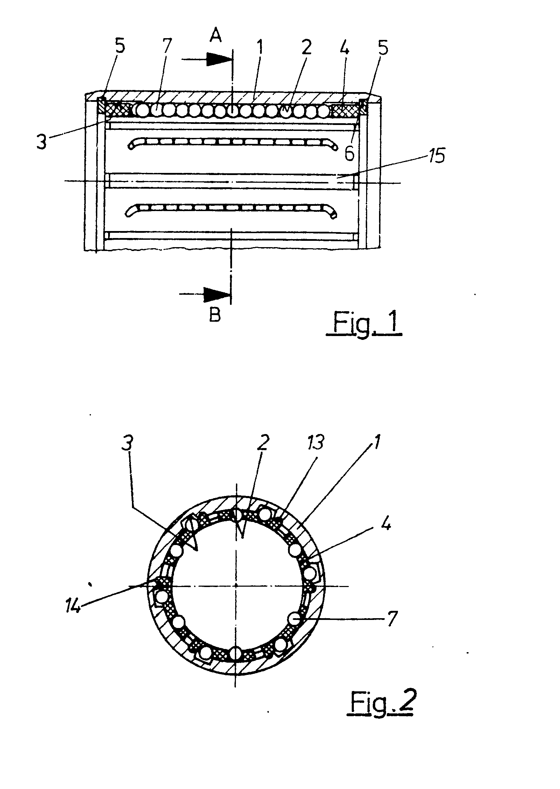

Das in den Fig. 1 und 2 dargestellte Kugellager für Längsbewegungen besteht aus einer Außenhülse 1 mit in der Bohrung am Umfang abwechselnd verteilten, axial verlaufenden Tragzonen 2 und Rücklaufzonen 3, einem in dieser Bohrung angeordneten Käfig 4, der durch Sprengringe 5, die in Ringnuten 6 der Außenhülse 1 eingesetzt sind, in axialer Richtung fixiert ist und den Kugeln 7.

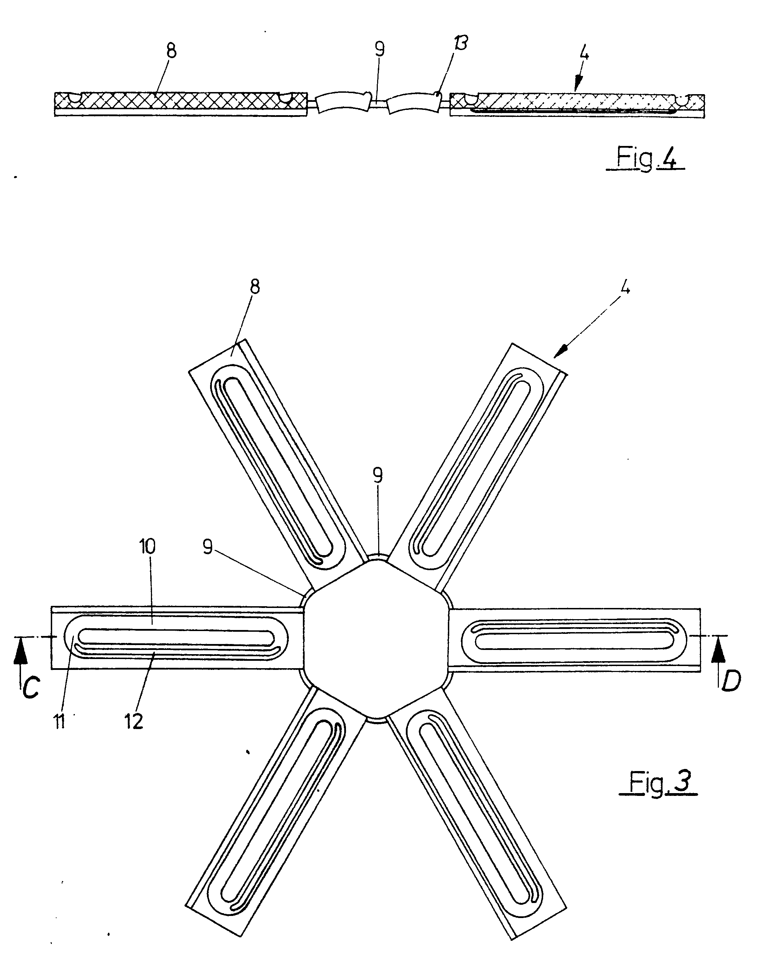

Der in Fig. 3 und 4 dargestellte, aus Kunststoff gegossene oder gespritzte Käfig 4 besteht aus sechs sternförmig angeordneten Käfigelementen 8, die durch einstückig mit diesen ausgebildete elastische Stege 9 miteinander verbunden sind. Die Stege 9 haben einen derartigen Querschnitt, daß sie sich beim Umbiegen der Käfigelemente 8 um ihre Längsseele verdrehen. Die Käfigelemente 8 weisen jeweils paarweise angeordnete, parallel zur Achsrichtung verlaufende, nach einer Seite offene Führungsbahnen 10 für die Kugeln 7 auf, die an den Enden durch halbkreisförmige Umlenkbahnen 11 verbunden sind, wobei jeweils eine Führungsnut 12 zum Durchtritt der Kugeln 7 auch nach der anderen Seite offen ist.

Der Einbau des Käfigs 4 erfolgt erfindungsgemäß auf einfache Weise durch Einschieben des Käfigs 4 in die Außenhülse 1, wobei die Käfigelemente 8 parallel zur Achsrichtung umklappen und sich an die Bohrungsfläche der Außenhülse 1 mit leichter Vorspannung anlegen. Hierbei zentriert sich der Käfig 4 selbsttätig in der Bohrung der Außenhülse 1. Die Käfigelemente 8 können auf der der Außenhülse 1 zugekehrten Seite mit angeformten Vorsprüngen 13 versehen werden, die zur Verdrehsicherung in entsprechende Ausnehmungen 14 der Außenhülse 1 eingreifen. Ferner ist durch die sich beim Einschieben des Käfigs 4 in die Außenhülse 1 ergebenden Spalten 15 (Fig. 1) zwischen den Käfigelementen 8 eine Einstellbarkeit der Käfigelemente 8 in Umfangsrichtung möglich. Somit nimmt der Käfig 4 automatisch die für einen guten Lauf der Kugeln 7 erforderliche Lage ein. Weiterhin sind Durchmessertoleranzen, besonders bei großen Käfigen 4, unbedeutend, weil sich die Käfigelemente 8 in radialer Richtung einstellen können. Ein besonderer Vorteil von zunächst in einer Ebene sternförmig zueinander angeordneten Käfigelementen liegt darin, daß für das Spritzen oder Gießen von derartigen Käfigen Axialschieberwerkzeuge (nicht gezeichnet), die auch als Mehrfachformen verwendbar sind, eingesetzt werden können, so daß eine sehr einfache und billige Herstellung des Käfigs möglich ist. Die Fertigung wird zusätzlich noch dadurch verbilligt, daß geringe Haltezeiten des Käfigs im Werkzeug durch, wie aus der Fig. 4 ersichtlich, gleichmäßige Käfigquerschnitte erreicht werden.

Die beschriebene Ausführungsform nach den Fig. 3 und 4 stellt nur ein Beispiel eines erfindungsgemäßen Käfigs dar. Dieser Käfig kann auch aus Stahlblech gefertigt sein. Der erfindungsgemäße Käfig und das erfindungsgemäße Verfahren sind ferner nicht nur für Kugellager für Längsbewegungen, sondern auch für Radial-Wälzlager verwendbar.

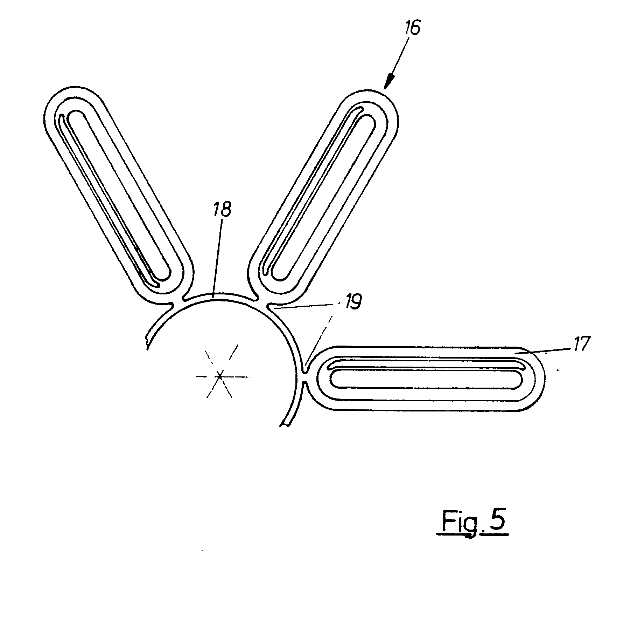

In der Fig. 5 ist eine dem bekannten Stand der Technik ähnliche, nicht unter Schutz gestellte Ausbildung eines Käfigs 16 aus Stahlblech dargestellt, die sich ebenfalls für das im Anspruch 1 beanspruchte Verfahren eignet. Die Käfigelemente 17 sind nahe den Verbindungsstegen 18 mit Ausnehmungen (Schwächungsstellen) 19 versehen, in deren Bereich die Käfigelemente 17 leicht umgeklappt werden können.

## Patentansprüche

1. Verfahren zur Herstellung eines Wälzlagers mit einem in einer Außenhülse (1) angeordneten Käfig (4), insbesondere für Kugellager für Längsbewegungen, mit in Achsrichtung verlaufenden Käfigelementen (8), die auf einer Seite durch Stege (9) ringförmig verbunden sind und vor dem Einbau in die Außenhülse (1) im wesentlichen in einer Ebene sternförmig angeordnet sind und im Bereich geschwächter im Verbindungsbereich angeordneter Stellen in Achsrichtung umgebogen werden, dadurch gekennzeichnet, daß das Umbiegen der Käfigelemente (8) durch Einschieben des Stegbereiches in die Außenhülse (1) erfolgt.

2. Käfig zur Durchführung des Verfahrens nach Anspruch 1, dadurch gekennzeichnet, daß die geschwächten Stellen durch Stege (9) mit einem derartigen Querschnitt dargestellt sind, daß beim Umbiegen der Käfigelemente (8) eine Verdrehung der Stege (9) um ihre Seele erfolgt.

## Claims

1. Manufacturing process realting to a rolling bearing with a cage (4) arranged in an outer sleeve (1), particularly for longitudinally moveable ball bearings, with axially extending cage elements (8) joined at one end by webs (9) distributed about the circumference of a circle which are, prior to being mounted in the outer sleeve (1), essentially arranged in the shape of a star in the same plane and which are bent in axial direction at recessed links at the juncture, characterized in that the bending of the cage elements (8) is performed by pushing the web area into the outer sleeve (1).

2. Cage to perform the process of claim 1, characterized in that the recessed links consist of webs (9) the section of which will permit the webs (9) to be twisted round their centre when bending the cage elements (8).

## Revendications

1. Procédé de fabrication d'un roulement avec une cage (4) disposée dans une douille extérieure (1), notamment pour des roulements à billes pour mouvements longitudinaux, la cage (4) comprenant des éléments (8) s'étendant en direction axiale qui sont reliés d'un côté par des barrettes (9) formant un cercle et qui sont, avant introduction dans la douille extérieure (1), disposes essentiellement en forme d'étoile sur le même plan et repliés en direction axiale à des endroits affaiblis se trouvant aux jonctions, caractérisé par le fait que le pliage des éléments de cage (8) se fait par glissement de la zone des barrettes dans la douille extérieure (1).

2. Cage pour la réalisation du procédé suivant la revendication 1, caractérisee par le fait que les endroits affaiblis sont des barrettes (9) réalisées avec une section permettant, lors du pliage des éléments de cage (8), la torsion des barrettes (9) autour de leur âme.

Fig. 1

Fig. 2

Fig.4

Fig.3

Fig. 5